# EUROPEAN PATENT APPLICATION

(11) **EP 2 578 302 A1**
(43) Date of publication of application: **10.04.2013**
(21) Application number: 11789554.0
(22) Date of filing: 20.04.2011
(51) Int. Cl.: B01D 69/12, B01D 71/32, B01D 71/36

(54) **CRYSTALLINE-POLYMER MICROPOROUS MEMBRANE, PROCESS FOR PRODUCING SAME, AND FILTER FOR FILTRATION**

(30) Priority: 16.08.2010 JP 2010181655; 01.06.2010 JP 2010126341
(71) Applicant: FUJIFILM Corporation, Tokyo 106-8620 (JP)
(72) Inventor: ISHIZUKA, Kenichi, Ashigarakami-gun, Kanagawa 258-8577 (JP); NISHITA, Nobuhiro, Ashigarakami-gun, Kanagawa 258-8577 (JP)
(74) Representative: HOFFMANN EITLE
(86) International application number: PCT/JP2011/059755
(87) International publication number: WO 2011/152145

(57) **Abstract**

To provide a crystalline polymer microporous membrane, which contains a laminate containing two or more layers and a plurality of pores piercing through the laminate in a thickness direction thereof, where the two or more layers include a layer containing a first crystalline polymer, and a layer containing a second crystalline polymer stacked to form the laminate, wherein the first crystalline polymer has a higher melting point than a melting point of the second crystalline polymer, wherein at least the layer containing the second crystalline polymer in the laminate has a microstructure containing at least fibrils having an average long axial length of 1 µm or shorter, and wherein at least one of the layers constituting the laminate has a plurality of pores whose average pore diameter is constant without any variation at least at part along a thickness direction of the laminate.

## Description

### Technical Field

The present invention relates to a crystalline polymer microporous membrane and a method for producing the crystalline polymer microporous membrane, and a filtration filter.

### Background Art

Microporous membranes have been known for long and widely used for filtration filters, etc. As such microporous membranes, there are, for example, a microporous membrane using cellulose ester as a material thereof (see PTL 1), a microporous membrane using aliphatic polyamide as a material thereof (see PTL 2), a microporous membrane using polyfluorocarbon as a material thereof (see PTL 3), a microporous membrane using polypropylene as a material thereof (see PTL 4), and the like.

These microporous membranes are used for filtration and sterilization of washing water for use in the electronics industries, water for medical use, water for pharmaceutical production processes and water for use in the food industry. In recent years, the applications of and amount for using microporous membranes have increased, and microporous membranes have attracted great attention because of their high reliability in trapping particles. Among them, microporous membranes made of crystalline polymers are superior in chemical resistance, and in particular, microporous membranes produced by using polytetrafluoroethylene (may be referred to as "PTEF" hereinafter) as a raw material are superior in both heat resistance and chemical resistance. Therefore, demands for such microporous membranes have been rapidly growing.

As for such crystalline polymer microporous membrane, proposed was to produce a multi-layer membrane composed of a filter layer having a small average pore diameter, and a support layer having a large average pore diameter, by laminating a layer of polytetrafluoroethylene (PTFE) homopolymer and a layer of modified polytetrafluoroethylene (PTFE) copolymer to prepare a preforming body, rolling the preforming body, heating the preforming body at the temperature equal to or higher than a melting point of the heated body (see PTL 5 and PTL 6). These proposals disclosed that it was possible to form an extremely thin filter layer, and disclosed the multi-layer membrane whose interface between the layers was completely united with the layers.

In these proposals, however, there was no detailed description for a condition for a heat treatment, and it was difficult to produce a membrane with very small pore diameters. Moreover, a thickness of a layer containing a crystalline polymer having a low melting point was not specified, and therefore it was difficult to produce a filter having a desired property (high flow rate).

Moreover, to efficiently capture fine particles, proposed was a crystalline polymer microporous membrane in which layers containing crystalline polymers each having different number average molecular weights, and in each layer pores whose diameters were continuously changed along the thickness direction thereof (see PTL 7).

In PTL 7, however, a melting point of a crystalline polymer was considered. Moreover, if a crystalline polymer having a low melting point is used, a problem, such as spread of tearing, occurs, and therefore it is difficult to produce a crystalline polymer microporous membrane having a multi-layer structure, which was very small pore diameters, and can efficiently capture fine particles in the size of several tens nanometers. Further, as it is necessary to give temperature gradient in a heating step of the production method of the crystalline polymer microporous membrane, it is difficult to stably and efficiently produce the membrane.

Accordingly, there is currently demanded need for urgently develop a crystalline polymer microporous membrane, which has very small pore diameters, can efficiently capture fine particles in the size of several tens nanometers without damaging a layer of a crystalline polymer having a low melting point, and has a high flow rate by laminating a layer containing a crystalline polymer having a low melting point, which cannot be easily formed into a membrane with a single layer thereof due to spread of tearing, with a layer containing a crystalline polymer having a high melting point, as well as developing a method for producing such crystalline polymer microporous membrane and a filtration filter.

### Citation List

### Patent Literature

PTL1: US Patent No. 1,421,341
PTL2: US Patent No. 2,783,894
PTL3: US Patent No. 4,196,070
PTL4: West German Patent No. 3,003,400
PTL5: Japanese Patent Application Laid-Open (JP-A) No. 03-179038
PTL6: JP-A No. 03-179039
PTL7: JP-A No. 2009-61363

### Summary of Invention

### Technical Problem

The present invention aims to solve the various problems in the conventional art, and to achieve the following object. Specifically, an object of the present invention is to provide a crystalline polymer microporous membrane having fine pore diameters, capable of efficiently capturing particles in the size of several tens nanometers, and giving high flow rate; to provide a method for producing a crystalline polymer microporous membrane; and to provide a filtration filter.

### Solution to Problem

The present inventors diligently conducted researches to solve the aforementioned problems. As a result, the present inventors have attained the following insights. Generally, a crystalline polymer having a low melting point has, in its DSC chart as obtained by a measurement using a differential scanning calorimeter, two peaks including a higher temperature side peak and a lower temperature side peak, or one peak and a shoulder on the higher or lower temperature side of the peak. As for a conventional PTFE multi-layer porous membrane disclosed in JP-A No. 03-179038 and JP-A No. 03-179039, a heat treatment is performed at temperature of the lower temperature size peak or temperature of one peak. Therefore, crystals of powder of a crystalline polymer having a low melting point are partially melted, but not completely melted (this state may be referred as "semi-baked"). It has been found that, when a membrane in such "semi-baked" state is drawn, a crystalline polymer microporous membrane, which is in a state of a nonwoven fabric and contains fibrils whose average long axis length of longer than 1 µm, without nodes.

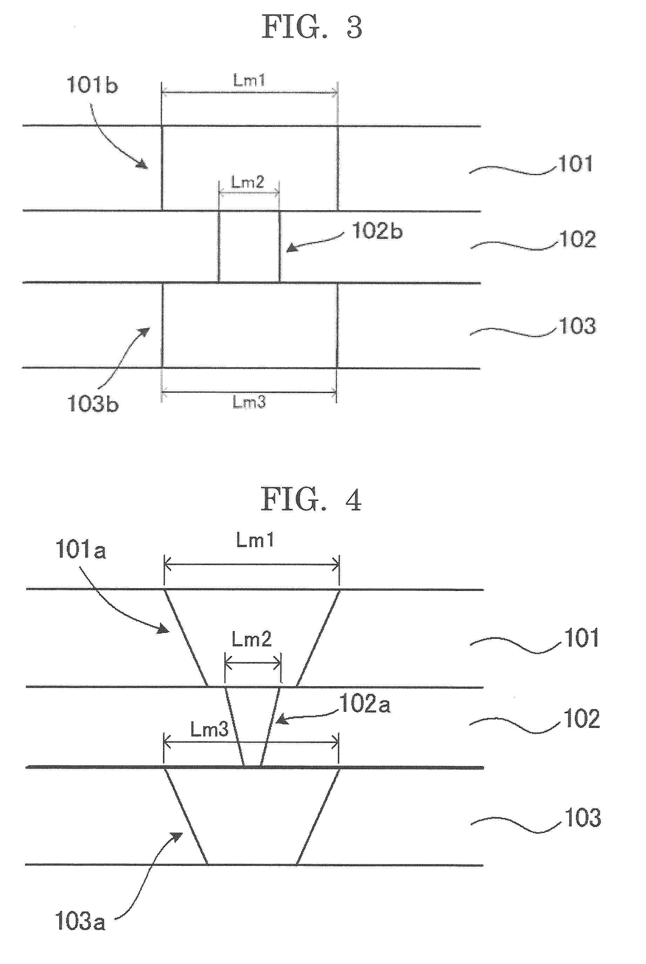

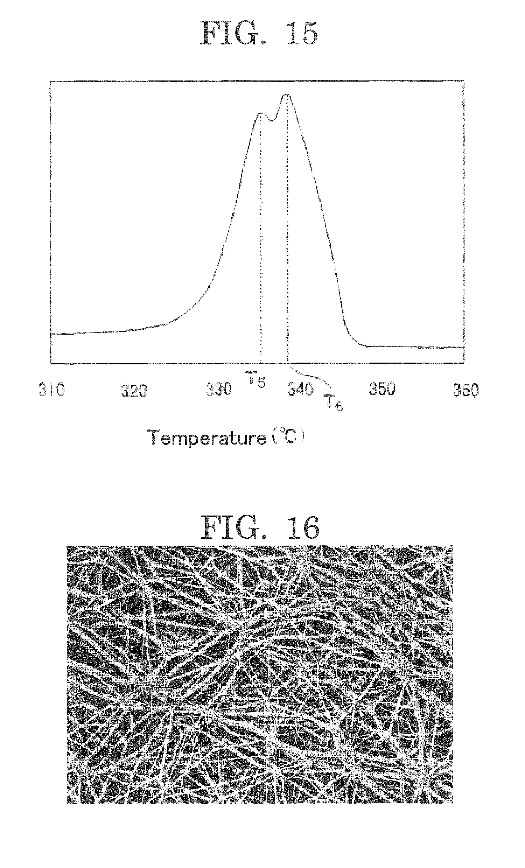

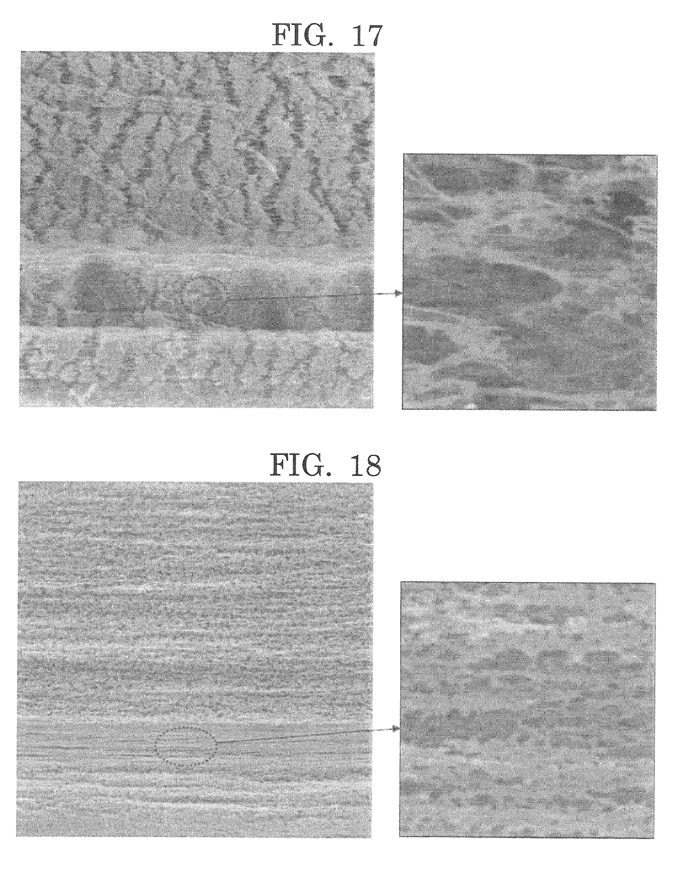

Moreover, JP-A No. 05-202217 discloses, as illustrated in FIG. 16 (FIG. 4 of JP-A No. 05-202217), that the "semi-baked" membrane is substantially consisting of long fibrils. As a result of an experiment conducted by the present inventors in accordance with JP-A No. 05-202217, it has been, however, found that a microporous membrane containing fibrils whose average long axis length is longer than 1 µm, and nodes is obtained as illustrated in FIG. 17.

Further, it has been found that a microporous membrane containing fibrils whose average long axis length is longer than 1 µm has a problem that an average pore diameter of such microporous membrane cannot be made sufficiently small.

In the present invention, on the other hand, a heat treatment is performed in the following manner. In the case where a DSC chart of a crystalline polymer having a low melting point as obtained by a measurement using a differential scanning calorimeter has a one peak and a shoulder on the higher temperature or lower temperature side of the peak, where the peak is present on the lower temperature side and the shoulder is present on the higher temperature size of the peak, symmetric heating of a laminate is performed at temperature higher than temperature of the lower temperature side peak. In the case where a DSC chart thereof has a peak on the higher temperature side and a shoulder on the lower temperature side of the peak, symmetric heating of a laminate is performed at temperature higher than temperature of the lower temperature side shoulder. Therefore, crystals of the crystalline polymer having a low melting point are melted at most of parts (this state may be referred to "entirely baked"). By drawing a membrane in such "entirely baked" state, as illustrated in FIG. 18, a microporous membrane having a microstructure containing short fibrils having the average long axis length of 1µm or shorter is obtained. As a result, pore diameters of the microporous membrane become small, and therefore a crystalline polymer microporous membrane capable of efficiently capture finer particles can be obtained. Generally, a microporous membrane obtained by drawing an entirely baked membrane has low porosity, which results in a low flow rate. In the present invention, however, it is possible to form an entirely baked membrane containing a crystalline polymer having a low melting point, whose thickness is thin. Therefore, it is possible to achieve a high flow rate with a membrane of the entirely baked state. Moreover, as at least one side of the layer having a crystalline polymer having a low melting point is protected with a layer containing a crystalline polymer having a high melting point, scratch resistance is improved, and a crystalline polymer microporous membrane of a multi-layer structure can be stably and efficiently produced.

The present invention is based upon the insights of the present inventors, and the means for solving the aforementioned problems are as follows:
<1> A crystalline polymer microporous membrane, containing:
   a laminate containing two or more layers and a plurality of pores piercing through the laminate in a thickness direction thereof, where the two or more layers include a layer containing a first crystalline polymer, and a layer containing a second crystalline polymer stacked to form the laminate,
   wherein the first crystalline polymer has a higher melting point than a melting point of the second crystalline polymer,
   wherein at least the layer containing the second crystalline polymer in the laminate has a microstructure containing at least fibrils having an average long axial length of 1 µm or shorter, and
   wherein at least one of the layers constituting the laminate has a plurality of pores whose average pore diameter is constant without any variation at least at part along a thickness direction of the laminate.
<2> The crystalline polymer microporous membrane according to <1>, wherein the microstructure further contains nodes.
<3> The crystalline polymer microporous membrane according to <1> or <2>, wherein the layer containing the second crystalline polymer has a plurality of pores having an average flow pore diameter of less than 200 nm.
<4> The crystalline polymer microporous membrane according to any one of <1> to <3>, wherein the laminate contains two layers of the layer containing the first crystalline polymer, and one layer of the layer containing the second crystalline polymer provided between the two layers of the layer containing the first crystalline polymer.
<5> The crystalline polymer microporous membrane according to any one of <1> to <4>, wherein the maximum thickness A of the layer containing the second crystalline polyester is less than the maximum thickness B of the layer containing the first crystalline polymer, and the maximum thickness A of the layer containing the second crystalline polyester and the maximum thickness B of the layer containing the first crystalline polymer satisfy a relationship of A/B ≤ 1/2.
<6> The crystalline polymer microporous membrane according to <5>, wherein the maximum thickness A of the layer containing the second crystalline polyester and the maximum thickness B of the layer containing the first crystalline polyester satisfy a relationship of A/B ≤ 1/3.
<7> The crystalline polymer microporous membrane according to any one of <1> to <6>, wherein the layer containing the second crystalline polymer in the laminate has a thickness of 0.1 µm to 50 µm.
<8> The crystalline polymer microporous membrane according to any one of <1> to <7>, wherein the first crystalline polymer is either polytetrafluoroethylene or a polytetrafluoroethylene copolymer.
<9> The crystalline polymer microporous membrane according to any one of <1> to <8>, wherein the second crystalline polymer is either polytetrafluoroethylene or a polytetrafluoroethylene copolymer.
<10> The crystalline polymer microporous membrane according to <8> or <9>, wherein the polytetrafluoroethylene copolymer contains at least two selected from the group consisting of tetrafluoroethylene, perfluoroalkyl vinyl ether, hexafluoropropylene, and chlorotrifluoroethylene.
<11> A method for producing a crystalline polymer microporous membrane, containing:
   placing and pressing a first crystalline polymer and a second crystalline polymer in a metal mold to produce a laminate preforming body including the first crystalline polymer and the second crystalline polymer, extruding the laminate preforming body, and rolling the extruded preforming body to form a laminate;
   symmetrically heating the laminate; and
   drawing the laminate,
   wherein the crystalline polymer microporous membrane is the crystalline polymer microporous membrane as defined in any one of <1> to <10>.
<12> The method for producing a crystalline polymer microporous membrane according to <11>, wherein the second crystalline polymer has one peak and a shoulder on the higher temperature or lower temperature side of the peak in a DSC chart thereof as obtained by a measurement using a differential scanning calorimeter,
   wherein, in the case where the peak is present on the lower temperature side and the shoulder is present on the higher temperature side of the peak, the symmetrically heating is performed at temperature higher than temperature of the peak on the lower temperature side, and
   in the case where the peak is present on the higher temperature side and the shoulder is present on the lower temperature side of the peak, the symmetrically heating is performed at temperature higher than temperature of the shoulder on the lower temperature side.
<13> The method for producing a crystalline polymer microporous membrane according to <11> or <12>, wherein the symmetrically heating the laminate is performed at temperature that is equal to or lower than a melting point of the first crystalline polymer.
<14> The method for producing a crystalline polymer microporous membrane according to any one of <11> to <13>, wherein the symmetrically heating the laminate is performed in a salt bath.
<15> A filtration filter, comprising the crystalline polymer microporous membrane as defined in any one of <1> to <10>.
<16> The filtration filter according to <15>, wherein the crystalline polymer microporous membrane is arranged so that the layer containing the second crystalline polymer having a low melting point comes close to a side of an outlet.

### Brief Description of Drawings

FIG. 1 is a schematic diagram illustrating one example of a crystalline polymer microporous membrane of a two-layer structure, according to the present invention.
FIG. 2 is a schematic diagram illustrating one example of a crystalline polymer of a two-layer structure of Comparative Example.
FIG. 3 is a schematic diagram illustrating one example of a crystalline polymer microporous membrane of a three-layer structure, according to the present invention.
FIG. 4 is a schematic diagram illustrating one example of a crystalline polymer of a three-layer structure of Comparative Example.
FIG. 5 is a diagram illustrating a process in a method for producing a crystalline polymer microporous membrane of the present invention.
FIG. 6 is a diagram illustrating another process in a method for producing a crystalline polymer microporous membrane of the present invention.
FIG. 7 is a diagram illustrating one example of a preforming body.
FIG. 8 is a diagram illustrating another process in a method for producing a crystalline polymer microporous membrane of the present invention.
FIG. 9 is a diagram illustrating another example of a preforming body.
FIG. 10 is a diagram illustrating a common structure of a common pleated filter element before mounted in a housing.
FIG. 11 is a diagram illustrating a common structure of a filter element before mounted in a housing of a capsule filter cartridge.
FIG. 12 is a diagram illustrating a common structure of a capsule filter cartridge integrated with a housing.
FIG. 13 is a DSC chart illustrating one example of a second crystalline polymer (crystalline polymer having a low melting point).
FIG. 14 is a DSC chart illustrating another example of a second crystalline polymer (crystalline polymer having a low melting point).
FIG. 15 is a DSC chart illustrating another example of a second crystalline polymer (crystalline polymer having a low melting point).
FIG. 16 is a scanning electron microscopic (SEM) photograph of FIG. 4 in JP-A No. 05-202217.
FIG. 17 illustrates in its left view a scanning electron microscopic (SEM) photograph of a cross-section of a crystalline polymer microporous membrane reproduced in accordance with JP-A No. 05-202217, and illustrates in its right view an enlarged photograph of an intermediate layer containing a second crystalline polymer (crystalline polymer having a low melting point).
FIG. 18 illustrates in its left view a scanning electron microscopic (SEM) photograph of a cross-section of the crystalline polymer microporous membrane of Example 1, and illustrates in its right view an enlarged photograph of an intermediate layer containing a second crystalline polymer (crystalline polymer having a low melting point).

### Description of Embodiments

### (Crystalline Polymer Microporous Membrane)

The crystalline polymer microporous membrane of the present invention contains at least a laminate, and may further contain other structures, if necessary.

### <Laminate>

The laminate contains a layer containing a first crystalline polymer and a layer containing a second crystalline polymer, and may further contain other layers, if necessary.

A melting point of the first crystalline polymer is higher than a melting point of the second crystalline polymer. The first crystalline polymer may be referred herein as a "crystalline polymer having a high melting point," and the second crystalline polymer may be referred herein as a "crystalline polymer having a low melting point."

Here, the melting point indicates a peak position in a DSC chart as obtained by a measurement using a differential scanning calorimeter. In the case where a DSC chart has two peaks, or in the case where a DSC chart has one peak and one shoulder, whichever having higher a peak intensity is determined as a melting point.

It is preferred that at least the layer containing the second crystalline polymer among the layers in the laminate have a microstructure containing at least fibrils having the average long axial length of 1 µm or shorter, where the microstructure contains nodes.

The fibril means a fiber produced between particles or within particle when mechanical force is applied fused two crystalline polymer particles.

The average long axial length of the fibrils is 1 µm or shorter, preferably 0.5 µm or shorter. When the average long axial length thereof is longer than 1 µm, a resulting membrane may not be able to sufficiently capture dusts such as fine particles.

The nodes are each a mass of primary particles of the crystalline polymer, the average short axial length (average diameter) of the masses is thicker than the average short axial length (average diameter) of the fibrils. The average diameter is preferably 0.1 µm or greater, more preferably 0.2 µm or greater. When the average diameter is less than 0.1 1 µm, sufficient membrane strength may not be attained.

The fact that at least the layer containing the second crystalline polymer in the laminate has "a microstructure containing at least fibrils having the average long axial length of 1 µm or shorter" and the diameters of the nodes can be measured in the following manner. A cross section of the laminate cut in the direction along the thickness of the laminate is photographed by a scanning electron microscope (SEM photograph, with magnification of × 1,000 to × 100,000). This cross-sectional SEM photograph is taken into an image processing apparatus (name of main body: TV IMAGE PROCESSOR TVIP-4100II, manufactured by Nippon Avionics Co., Ltd., name of control software: TV IMAGE PROCESSOR IMAGE COMMAND 4198, manufactured by Ratoc System Engineering Co., Ltd.) to separate the images of nodes and the images of fibrils. As a result, an image containing only nodes and an image containing only fibrils are obtained. One hundred of the nodes or fibrils are randomly selected from each image, and the average long axial length of the fibrils and the average diameter of the nodes are each measured by arithmetically processing the measurements obtained from each image.

At least one of the layers constituting the laminate has a plurality of pores whose average pore diameter is constant without any variation at least at part thereof along the thickness direction of the laminate.

The laminate means "a multi-layer structure" formed by stacking two or more crystalline polymer layers, not "a single-layer structure."

The aforementioned "laminate structure" can be clearly distinguished from the "single-layer structure", which has no border in the structure, by the fact that the laminate structure has a border between the layer containing a crystalline polymer and the layer containing another crystalline polymer. Here, the presence of the border between the layer containing a crystalline polymer and the layer containing another crystalline polymer can be detected for example by observing a cross-section of the crystalline polymer microporous membrane cut in the direction along the thickness through an optical microscope or a scanning electron microscope (SEM).

The structure of the laminate is suitably selected depending on the intended purpose without any restriction, provided that the structure contains two or more layers. The structure of the laminate is preferably a structure thereof containing two or more layers each containing the first crystalline polymer (i.e., crystalline polymer having a high melting point) and one layer containing the second crystalline polymer (i.e., crystalline polymer having a low melting point), more preferably a three-layer structure containing two layers each containing the first crystalline polymer (i.e., crystalline polymer having a high melting point), and one layer containing the second crystalline polymer (i.e., crystalline polymer having a low melting point) provided between the two layers each containing the first crystalline polymer (i.e., crystalline polymer having a high melting point). By giving the three-layer structure to the crystalline polymer microporous membrane, the capturing performance of the membrane can be stabilized by preventing the second crystalline polymer (i.e. crystalline polymer having a low melting point) having the smallest pore diameter, which gives the largest influence to a diameter of particles to be captured, from factors of physical damages such as frictions and scratches.

Moreover, in the three-layer structure, it is preferred that a thickness of one of the layers each containing the first crystalline polymer (i.e., crystalline polymer having a high melting point) be thicker than a thickness of the layer containing the second crystalline polymer (i.e., crystalline polymer having a low melting point), and the other layer containing the first crystalline polymer (i.e., crystalline polymer having a high melting point) be thicker than the thickness of the layer containing the second crystalline polymer (i.e., crystalline polymer having a low melting point).

By arranging the crystalline polymer microporous membrane so that the layer having the first crystalline polymer (i.e., crystalline polymer having a high melting point) thicker than that of the layer containing the second crystalline polymer (i.e., crystalline polymer having a low melting point) faces the side of an outlet, particles in the size of several tens nanometers can be efficiently captured, and a flow rate of the crystalline polymer microporous membrane can be improved.

In the crystalline polymer microporous membrane of the present invention, a plurality of pores piercing through the laminate are formed in the thickness direction, and at least one of the layers constituting the laminate has a plurality of pores whose average diameter is constant at least at part along the thickness direction of the laminate. According to such configuration, the crystalline polymer microporous membrane can efficiently capture particles.

The fact "a plurality of pores piercing through the laminate are formed" can be confirmed by observing under an optical microscope or a scanning electron microscope (SEM).

The "at least one of the layer constituting the laminate has a plurality of pores whose average pore diameter is constant without a variation at least at part of the laminate along the thickness direction of the laminate" means that, when the distance d from the front surface of the crystalline polymer microporous membrane in the thickness direction (which is equivalent to a depth from the front surface) is plotted on a horizontal axis of a graph, and the average pore diameter D of the pores is plotted on a vertical axis of the graph, (1) the graph covering from the front surface (d = 0) to a back surface (d = membrane thickness) is represented by one continuous line (represented continuously) per crystalline polymer layer, and the inclination of the graph (dD/dt) is substantially 0 (zero).

Here, the "substantially 0" is construed to include the variation of approximately ± 10% from the average value, and indicates that it does not include constant increase and constant decrease.

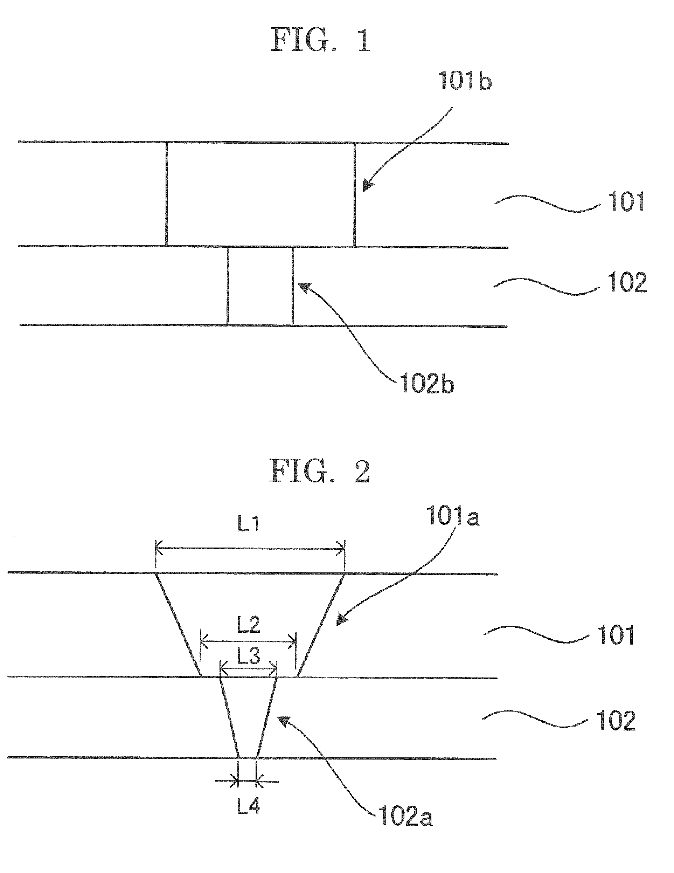

As illustrated in FIG. 1, in the crystalline polymer Microporous membrane of the present invention that has a two-layer structure where layers 101, 102 each containing a crystalline polymer are laminated, the average pore diameters of the pores 101b, 102b are both constant without any variation along the thickness direction of the laminate, but looking at the crystalline polymer microporous membrane as a whole, the average pore diameter changes (decreases stepwise) along the thickness direction.

On the other hand, in a crystalline polymer microporous membrane of a comparative example that has a two-layer structure where layers 101, 102, each containing a crystalline polymer, as illustrated in FIG. 2, the average pore diameters of the pores 101a, 102a change (continuously decrease) along the thickness direction of the laminate, and looking at the crystalline polymer microporous membrane as a whole, the average pore diameter changes (decreases stepwise) along the thickness direction.

As illustrated in FIG. 3, moreover, in the crystalline polymer microporous membrane of the present invention that has a three-layer structure where layers 101, 102, 103 each containing a crystalline polymer are laminated, the average pore diameters of the pores 101b, 102b, 103b are all constant without any variation along the thickness direction of the laminate, but looking at the crystalline polymer microporous membrane as a whole, there is a part where the average pore diameter changes stepwise along the thickness direction.

On the other hand, in the crystalline polymer microporous membrane of a comparative example that has a three-layer structure where layers 101, 102, 103 each containing a crystalline polymer are laminated, as illustrated in FIG. 4, the average pore diameters of the pores 101a, 102a, 103a all change (continuously decrease) along the thickness direction of the laminate, and looking at the crystalline polymer microporous membrane as a whole, the average pore diameter changes (decreases stepwise) along the thickness direction.

It is preferred that the laminate formed by laminating three or more layers each containing a crystalline polymer contain, in its inner part, a layer containing a crystalline polymer having a low melting point, which has the smallest maximum average pore diameter of the pores than the maximum average pore diameters of the pores in other layers. In accordance with such arrangement, the layer containing a crystalline polymer, which has the smallest average pore diameter that affects a capturing particle diameter the most, can be protected from physical damages such as friction and scratch. Therefore, capturing ability of a membrane can be stabilized, and a membrane can be stably produced.

Here, as illustrated in FIG. 3, in the crystalline polymer microporous membrane having a three-layer structure where layers 101, 102, 103, each containing a crystalline polymer, the layer 102 containing the crystalline polymer having a low melting point, which has the smallest maximum pore diameter Lm2 among the maximum average pore diameters Lm1, Lm2, Lm3 of the pores 101b, 102b, 103b, is present in an inner part of the crystalline polymer microporous membrane (laminate).

The average pore diameter of the pores in the layer containing the second crystalline polymer is preferably 1 µm or smaller, more preferably 0.5 µm or smaller. When the average pore diameter of the pores in the layer containing the second crystalline polymer is lager than 1 µm, dusts, such as fine particles, in a fluid may not be sufficiently captured.

Moreover, the average pore diameter of the pores in the layer containing the first crystalline polymer is appropriately selected depending on the intended purpose without any limitation, but it is preferably 0.001 µm to 500 µm, more preferably 0.002 µm to 250 µm, and even more preferably 0.005 µm to 100 µm.

The average pore diameter of the pores is, for example, measured in the following manner. A surface or cross-section of the membrane is photographed (SEM photograph with a magnification of × 1,000 to × 100,000) using a scanning electron microscope (HITACHI S-4300, 4700 type, manufactured by Hitachi, Ltd.), and an image of the obtained photograph is taken into an image processing apparatus (Name of main body: TV IMAGE PROCESSOR TVIP-4100II, manufactured by Nippon Avionics Co., Ltd., Name of control software: TV IMAGE PROCESSOR IMAGE COMMAND 4198, manufactured by Ratoc System Engineering Co., Ltd.) so as to extract an image only containing crystalline polymer fibers. Based on this image of the crystalline polymer fibers, the average pore diameter is calculated by arithmetically processing the measured pores on the image.

The average flow pore diameter of the pores in the layer containing the second crystalline polymer is smaller than 200 nm, more preferably 150 nm or smaller. When the average flow pore diameter of the pores in the layer containing the second crystalline polymer is 200 nm or larger, dusts, such as fine particles, in a fluid may not be sufficiently captured.

Moreover, the average flow pore diameter of the pores in the layer containing the first crystalline polymer is appropriately selected depending on the intended purpose without any limitation, but it is preferably 0.001 µm to 0.5 µm.

When the average flow pore diameter thereof is smaller than 0.001 µm, a sufficient flow rate may not be attained. When the average flow pore thereof is larger than 0.5 µm, a rate of capturing fine particles having small diameters may fall.

Here, the average flow pore diameter means a pore diameter determined with an intersection between 1/2 of an air flow rate in a dry state and an air flow rate in a wet state, and can be measured, for example, by a half dry method (ASTM E1294-89). Specifically, it can be measured by a high pressure (500 psi) perm porometer (manufactured by Porous Materials, Inc.) with proviso that the size of the pores is greater than 15 nm, and for the size of 15 nm or smaller, it can be measured by a nano perm porometer (manufactured by Porous Materials, Inc.).

### -Crystalline Polymer-

In the present specification, the term "crystalline polymer" means a polymer having a molecular structure in which crystalline regions containing regularly-aligned long-chain molecules are mixed with amorphous regions having not regularly aligned long-chain molecules. Such polymer exhibits crystallinity through a physical treatment. For example, if a polyethylene film is drawn by an external force, a phenomenon is observed in which the initially transparent film turns to the clouded film in white. This phenomenon is derived from the expression of crystallinity which is obtained when the molecular alignment in the polymer is aligned in one direction by the external force.

The crystalline polymer is appropriately selected depending on the intended purpose without any limitation, and examples thereof include polyalkylene, polyester, polyamide, polyether, and liquid crystalline polymer. Specific examples of the crystalline polymer include polyethylene, polypropylene, nylon, polyacetal, polybutylene terephthalate, polyethylene terephthalate, syndiotactic polystyrene, polyphenylene sulfide, polyether ether ketone, wholly aromatic polyamide, wholly aromatic polyester, fluororesin, and polyether nitrile. Among them, polyalkylene (e.g. polyethylene and polypropylene) is preferable, fluoropolyalkylene in which a hydrogen atom of the alkylene group in polyalkylene is partially or wholly substituted with a fluorine atom is more preferable, and polytetrafluoroethylene (PTFE) is particularly preferable, as they have desirable chemical resistance and handling properties.

The polyethylene varies in its density depending on the branching degree thereof and generally classified into low-density polyethylene (LDPE) that has a high branching degree and low crystallinity, and high-density polyethylene (HDPE) that has a low branching degree and high crystallinity. Both LDPE and HDPE can be used in the present invention. Among them, HDPE is particularly preferable in light of the easiness of the crystallinity control.

As the aforementioned polytetrafluoroethylene, polytetrafluoroethylene prepared by emulsification polymerization can be generally used, and use of powdery polytetrafluoroethylene obtained by the coagulation of the aqueous dispersion liquid obtained by the emulsification polymerization is preferable.

The polytetrafluoroethylene is appropriately selected depending on the intended purpose without any limitation. For example, commercially available products of polytetrafluoroethylene can be used. Examples of such commercial products include: POLYFLON PTFE F-$104, POLYFLON PTFE F-106, POLYFLON PTFE F-201, POLYFLON PTFE F-205, POLYFLON PTFE F-208, POLYFLON PTFE F-301, POLYFLON PTFE F-302, LUBRON L-2, and LUBRON L-5 (all manufactured by DAIKIN INDUSTRIES, LTD.); FLUON PTFE CD1, FLUON PTFE CD141, FLUON PTFE CD145, FLUON PTFE CD123, FLUON PTFE CD076, FLUON PTFE CD090, and FLUON PTFE CD126 (all manufactured by ASAHI GLASS CO., LTD.); and Teflon^{®} PTFE 6-J, Teflon^{®} PTFE 62XT, Teflon^{®} PTFE 6C-J, and Teflon^{®} PTFE 640-J (all manufactured by DU PONT-MITSUI FLUOROCHEMICALS COMPANY, LTD.). Among them, F-104, F-106, F-205, F-201, L-5, CD1, CD141, CD126, CD123, and 6-J are preferable, F-106, F-205, F-201, CD1, CD126, CD123, and 6-J are more preferable, and F-106, F-205, CD126, and CD123 are even more preferable.

The glass transition temperature of the crystalline polymer is appropriately selected depending on the intended purpose without any limitation, but it is preferably -100°C to 400°C, more preferably -90°C to 350°C.

The weight average molecular weight of the crystalline polymer is appropriately selected depending on the intended purpose without any limitation, but it is preferably 1,000 to 100,000,000.

The number average molecular weight of each crystalline polymer is appropriately selected depending on the intended purpose without any limitation, but it is preferably 500 to 50,000,000, more preferably 1,000 to 25,000,000.

The number average molecular weight can be measured, for example, by gel permeation chromatography (GPC). Since PTFE is insoluble to a solvent, however, it is preferred that the number average molecular weight thereof be measured by measuring heat of crystallization [ΔHc (cal/g)] and calculating using the measured value in the relational expression: Mn = 2.1×10¹⁰×ΔHc^{-5.16}.

### «Layer Containing First Crystalline Polymer (Crystalline polymer having a high melting point) »

The layer containing the first crystalline polymer (crystalline polymer having a high melting point) is appropriately selected depending on the intended purpose without any limitation, provided that the layer contains the first crystalline polymer (crystalline polymer having a high melting point).

The maximum thickness of the layer containing the first crystalline polymer (crystalline polymer having a high melting point) is thicker than the maximum thickness of the layer containing the second crystalline polymer (crystalline polymer having a low melting point). By adjusting the thicknesses of the layers in this manner, the flow rate of the crystalline polymer microporous membrane can be improved.

Here, the "maximum thickness" means the maximum value in the thickness of each layer. For example, in the case the laminate contains a 20 µm-thick layer containing a first crystalline polymer (crystalline polymer having a high melting point), a 15 µm-thick layer containing a first crystalline polymer (crystalline polymer having a high melting point), and a 10 µm-thick layer containing a first crystalline polymer (crystalline polymer having a high melting point), the maximum thickness of the layer containing the first crystalline polymer (crystalline polymer having a high melting point) is 20 µm. In the case where the laminate contains a 20 µm-thick layer containing a second crystalline polymer (crystalline polymer having a low melting point), a 15 µm-thick layer containing a second crystalline polymer (crystalline polymer having a low melting point), and a 10 µm-thick layer containing a second crystalline polymer (crystalline polymer having a low melting point), the maximum thickness of the layer containing the second crystalline polymer (crystalline polymer having a low melting point) is 20 µm.

The thickness of the layer containing the first crystalline polymer (crystalline polymer having a high melting point) is appropriately selected depending on the intended purpose without any limitation, but it is preferably 1.0 µm to 100 µm, more preferably 1.25 µm to 75 µm, and even more preferably 1.5 µm to 50 µm.

When the thickness of the layer containing the first crystalline polymer (crystalline polymer having a high melting point) is less than 1.0 µm, the crystalline polymer having a low melting point may be influenced from abrasions or scratching, which may affect stable ability of a resulting membrane to capture fine particles. When the thickness thereof is more than 100 µm, a sufficient flow rate may not be attained. Note that, the layer containing the first crystalline polymer (crystalline polymer having a high melting point) in the thickness of the aforementioned even more preferable range is advantageous in terms of an ability to capture fine particles, and a flow rate.

In the case where the crystalline polymer microporous membrane has a two-layer structure, a ratio of the thickness of the layer containing the first crystalline polymer (crystalline polymer having a high melting point) to the thickness of the layer containing the second crystalline polymer (crystalline polymer having a low melting point) is preferably 10,000 : 1 to 1.2 : 1, more preferably 5,000 : 1 to 1.25 : 1, and even more preferably 1,000 : 1 to 1.5 : 1.

When the ratio is >10,000 (more than 10,000) : 1, a thickness of the layer containing the crystalline polymer having a low melting point may not be precisely controlled. When the ratio is <1.2 (less than 1.2) : 1, the layer containing the crystalline polymer having a low melting point may be influenced from abrasion and scratches, and therefore a resulting membrane may not be able to maintain a stable ability to capture fine particles. Note that, the ratio falling into within the aforementioned even more preferable range is advantageous in terms of a thickness control and an ability to capture fine particles.

In the case where the crystalline polymer microporous membrane has a three- layer structure (two layers of the layer containing the first crystalline polymer (crystalline polymer having a high melting point), and one layer of the layer containing the second crystalline polymer (crystalline polymer having a low melting point) provided between the two layers of the layer containing the first crystalline polymer (crystalline polymer having a high melting point)), a ratio of the maximum thickness of the layer containing the first crystalline polymer (crystalline polymer having a high melting point) to a thickness of the layer containing the second crystalline polymer(crystalline polymer having a low melting point) is preferably 5,000 : 1 to 1.2 : 1, more preferably 2,500 : 1 to 1.25 : 1, and even more preferably 1,000 : 1 to 1.5 : 1.

When the ratio thereof is >5,000 (more than 5,000) : 1, a thickness of the layer containing the crystalline polymer having a low melting point may not be precisely controlled. When the ratio thereof is <1.2 (less than 1.2) : 1, the layer containing the crystalline polymer having a low melting point may be influenced from abrasion and scratches, and therefore a resulting membrane may not be able to maintain a stable ability to capture fine particles. Note that, the ratio falling into the aforementioned even more preferable range is advantageous in terms of a thickness control and an ability to capture fine particles.

A thickness of another layer (another layer to the one having the maximum thickness) among the two layers of the layer containing the first crystalline polymer (crystalline polymer having a high melting point) is appropriately selected depending on the intended purpose without any limitation, but it is preferably equal to or greater than the thickness of the layer containing the second crystalline polymer.

When the thickness is greater than the thickness of the layer containing the second crystalline polymer, a flow rate of a resulting membrane may not be sufficient. Note that the thickness falling within the aforementioned even more preferable range is advantageous in terms of a flow rate.

Here, a thickness of each layer can be measured, for example, by freeze-fracturing the crystalline polymer microporous membrane, and observing the cross-section of each layer under a scanning electron microscope (SEM).

### -First Crystalline Polymer (Crystalline polymer having a high melting point)-

The first crystalline polymer (crystalline polymer having a high melting point) is appropriately selected depending on the intended purpose without any limitation, provided that it is a crystalline polymer having a higher melting point than a melting point of the below-mentioned crystalline polymer having a low melting point. Considering chemical resistance, however, the first crystalline polymer (crystalline polymer having a high melting point) is preferably selected from polytetrafluoroethylene (PTFE), and polytetrafluoroethylene copolymer.

The polytetrafluoroethylene copolymer is appropriately selected depending on the intended purpose without any limitation, and examples thereof include a copolymer composed of at least one polymer, such as a bipolymer or terpolymer or higher (e.g., tetrafluoroethylene-trifluorochloroethylene copolymer, tetrafluoroethylene-perfluoroalkyl vinyl ether copolymer, tetrafluoroethylene-ethylene copolymer, tetrafluoroethylene-hexafluoropropylene copolymer, and tetrafluoroethylene-ethylene copolymer). Among them, particularly preferred is polytetrafluoroethylene copolymer containing at least two selected from the group consisting of tetrafluoroethylene, perfluoroalkyl vinyl ether, hexafluoropropylene, and chlorotrifluoroethylene.

The melting point of the first crystalline polymer (crystalline polymer having a high melting point) is appropriately selected depending on the intended purpose without any limitation, provided that it is higher than the melting point of the below-described second crystalline polymer (crystalline polymer having a low melting point). However, the melting point of the first crystalline polymer (crystalline polymer having a high melting point) is preferably higher than the melting point of the second crystalline polymer (crystalline polymer having a low melting point) by 1°C or more, more preferably by 3°C or more.

When the melting point of the first crystalline polymer (crystalline polymer having a high melting point) is lower than the melting point of the second crystalline polymer (crystalline polymer having a low melting point), a resulting membrane may not attain a sufficient flow rate, and a filtration efficiency thereof may be significantly decreased.

The melting point of the crystalline polymer means temperature of a peak of an endothermic curve obtained as measured, for example, by a differential scanning calorimeter (DSC).

### «Layer Containing Second Crystalline Polymer (Crystalline polymer having a low melting point)»

The layer containing the second crystalline polymer (crystalline polymer having a low melting point) is appropriately selected depending on the intended purpose without any limitation, provided that it contains a second crystalline polymer (crystalline polymer having a low melting point).

A thickness of the layer containing the second crystalline polymer (crystalline polymer having a low melting point) is appropriately selected depending on the intended purpose without any limitation, but it is preferably 0.1 µm to 50 µm, more preferably 0.1 µm to 25 µm. When the thickness thereof is less than 0.1 µm, diameters of the pores cannot be made small, which may lose in-plane uniformity of pore diameters. When the thickness thereof is more than 50 µm, a membrane of high flow rate may not be attained. The layer containing the second crystalline polymer (crystalline polymer having a low melting point) in the thickness of the aforementioned even more preferable range is advantageous in terms of the in-plane uniformity of pore diameters, and flow rate.

The maximum thickness A of the layer containing the second crystalline polymer (crystalline polymer having a low melting point) is thinner than the maximum thickness B of the layer containing the first crystalline polymer (crystalline polymer having a high melting point), and the maximum thickness A and the maximum thickness B preferably satisfy the relationship of A/B ≤ 1/2, more preferably A/B ≤ 1/3. When the value of A/B is less than 1/2, the layer containing the crystalline polymer having a low melting point is influenced from friction and scratch, and therefore a resulting membrane may not be able to maintain an ability to stably capture fine particles. When the value of A/B is the aforementioned more preferable range, it is advantageous in terms of an ability of a membrane to capture fine particles.

When a thickness of the layer containing the crystalline polymer having a low melting point is thin, a resulting membrane improves its flow rate but lowers its capturing rate of fine particles. When a thickness of the layer containing the crystalline polymer having a low melting point, on the other hand, a resulting membrane decreases its flow rate, but improves its capturing rate of fine particles.

In the case where an intermediate layer containing both the crystalline polymer having a high melting point and the crystalline polymer having a low melting point is present at an interface of each layer, the intermediate layer is not classified as neither the layer containing the first crystalline polymer (crystalline polymer having a high melting point), nor the layer containing the second crystalline polymer (crystalline polymer having a low melting point).

### -Second Crystalline Polymer (Crystalline polymer having a low melting point)-

The second crystalline polymer (crystalline polymer having a low melting point) is appropriately selected depending on the intended purpose without any limitation, provided that it is a crystalline polymer having a low melting point than a melting point of the first crystalline polymer (crystalline polymer having a high melting point). Considering chemical resistance, however, the second crystalline polymer (crystalline polymer having a low melting point) is preferably selected from polytetrafluoroethylene (PTFE), and polytetrafluoroethylene copolymer.

The polytetrafluoroethylene copolymer is appropriately selected depending on the intended purpose without any limitation, and examples thereof include those listed for the first crystalline polymer.

A total thickness of the crystalline polymer microporous membrane is appropriately selected depending on the intended purpose without any limitation, but it is preferably 1 µm to 300 µm, more preferably 5 µm to 200 µm, and even more preferably 10 µm to 100 µm.

### (Method for Producing Crystalline Polymer Microporous Membrane)

The method for producing a crystalline polymer microporous membrane of the present invention contains at least a laminate forming step, a heating step, and a drawing step, and may further contain other steps, if necessary.

### «Laminate Forming Step»

The laminate forming step is laminating a layer containing a first crystalline polymer (crystalline polymer having a high melting point) and a layer containing a second crystalline polymer (crystalline polymer having a low melting point) to form an unheated film laminate having two or more layers.

The first crystalline polymer (crystalline polymer having a high melting point) and the second crystalline polymer (crystalline polymer having a low melting point), which have mutually different melting points, are appropriately selected depending on the intended purpose without any limitation.

The laminate forming step is not particularly limited, and can be performed in accordance with a conventional paste extrusion method.

At first, two layers or more of a mixture (paste) formed by missing each crystalline polymer with an extrusion aid are laminated to produce a preforming body, and the preforming body is rolled to produce a multi-layer crystalline polymer unheated film (unheated film laminate). As the extrusion aid, a fluid lubricant is preferably used, and examples thereof include solvent naphtha, and white oil. Moreover, a commercial product can be used as the extrusion aid. As the commercial product as mentioned, hydrocarbon oil, such as ISOPAR, manufactured by Esso Sekiyu K.K. may be used. An amount of the extrusion aid is preferably 15 parts by mass to 30 parts by mass relative to 100 parts by mass of the crystalline polymer.

The paste extrusion is preferably carried out at the temperature ranging from 19°C to 200°C. The extrusion shape is appropriately selected depending on the intended purpose without any limitation, but generally, it is preferably a rod shape and/or a sheet shape, and more preferably a sheet shape. The extrusion product is then rolled to form into a film. The rolling can be carried out by performing calendering with a calender roller at the speed of 5 m/min. The temperature for the rolling can be generally set to the range of 19°C to 380°C. thereafter, the film is heated to remove the extrusion aid, thereby to produce a multi-layer crystalline polymer unheated film. The heating temperature for this can be appropriately selected depending on the types of the extrusion aid for use, but it is preferably 40°C to 400°C, more preferably 60°C to 350°C. For example, in the case where polytetrafluoroethylene is used for a film and solvent naphtha is removed, the heating temperature is preferably 150°C to 280°C, more preferably 180°C to 260°C. The heating may be performed by passing the film through a hot air drying oven. A thickness of the multi-layer crystalline polymer unheated film produced in the aforementioned manner is appropriately adjusted depending on an intended thickness of a final product of a crystalline polymer microporous membrane, and the thickness thereof needs to be adjusted considering a reduction in the thickness during the later drawing step.

For the production of the multi-layer crystalline polymer unheated film, the descriptions in "Polyflon Handbook" (published by DAIKIN INDUSTRIES, LTD., revised edition of 1983) may be appropriately applied.

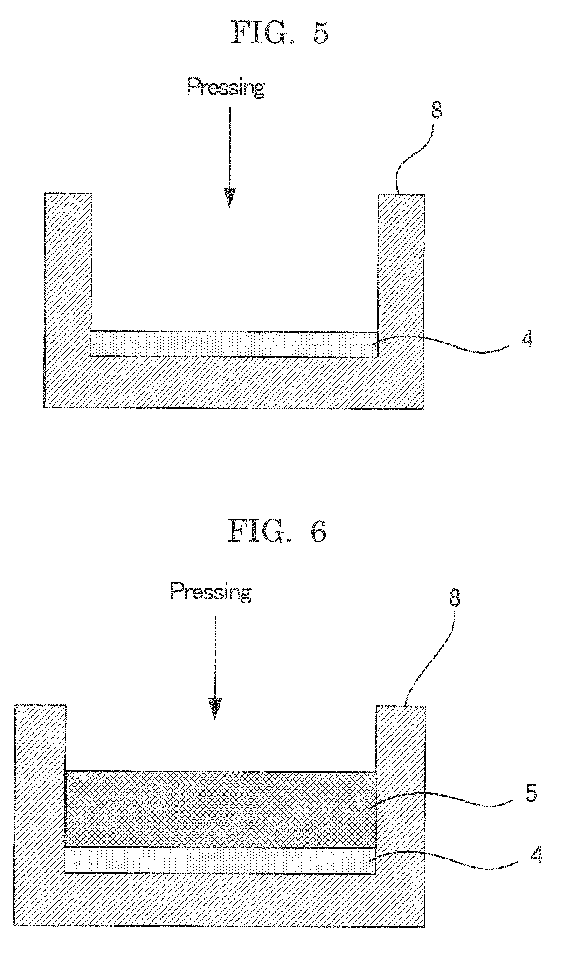

Here, one example of the method for producing a crystalline polymer microporous membrane of the present invention will be explained with reference to FIGs. 5 to 8.

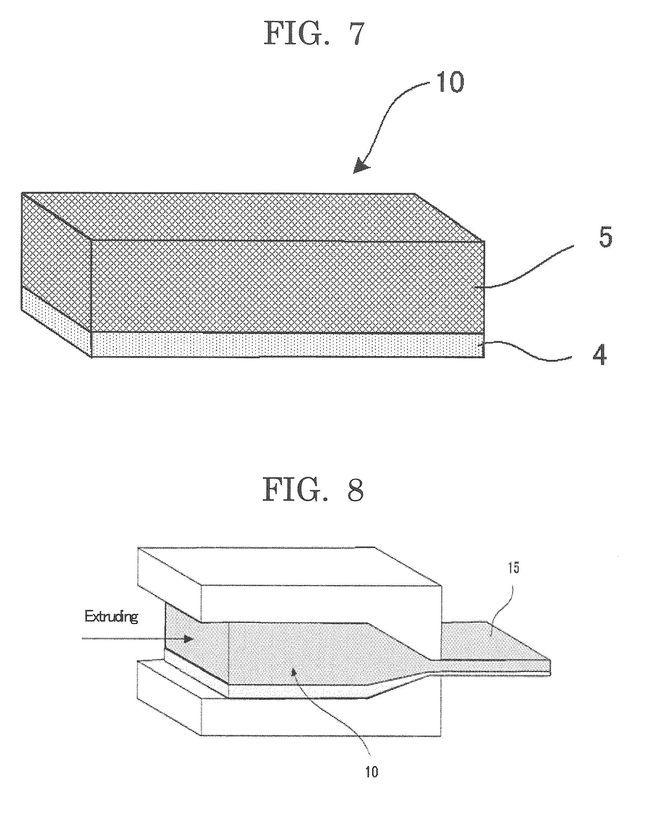

As illustrated in FIG. 7, produced is a preforming body 10 having a two-layer structure composed of a first layer 4 containing PTFE fine powder 1, and a second layer 5 containing PTFE fine powder 2.

These layers are respectively formed of a paste 1 and a paste 2, each prepared by adding a fluid lubricant, such as solvent naphtha and white oil, to PTFE fine powder produced by coagulating PTFE emulsified polymerization aqueous dispersed elements having the average primary particle diameter of 0.2 µm to 0.4 µm. An amount of the fluid lubricant is not particularly limited, and cannot be collectively determined as it differs depending on the fluid lubricant for use, or conditions for shaping. However, the amount of the fluid lubricant is preferably 15 parts by mass to 35 parts by mass relative to 100 parts by mass of the PTFE fine powder. Optionally, a colorant or the like can be further added.

At first, the paste 1 containing the PTFE fine powder 1 for forming the first layer is placed in a box-shaped bottom metal mold 8 as illustrated in FIG. 5 to give a layer of the paste 1 in the bottom metal mold 8, and then is compressed in the direction shown with an arrow with an upper metal mold (not illustrated) to form a first layer 4.

Next, the upper metal mold (not illustrated) is taken out, and the paste 2 containing the PTFE fine powder 2 for forming a second layer is placed on the first layer 4, and is compressed in the similar manner to the above using the upper metal mold (not illustrated), to thereby form a second layer 5 on the first layer 4, as illustrated in FIG. 6. In the manner as mentioned, a preforming body 10 molded into a size that can be housed in a cylinder of a paste extruder as illustrated in FIG. 7 is attained.

Next, the obtained preforming body 10 is housed in a cylinder of the paste extruder, as illustrated in FIG. 8, followed by extruding the paste in the direction shown with an arrow by means of a pressing unit (not illustrated). The cylinder of the paste extruder of FIG. 8 has for example a rectangular shape in the size of 50 mm × 100 mm at the cross-sectional direction that has right-angle to an axis, and a nozzle in the size of 50 mm × 5 mm, which is formed by narrowing the outlet end of the cylinder.

In the manner as mentioned, the first layer 4 and the second layer 5 are completely united, to thereby form a precursor 15 of a multi-layer polytetrafluoroethylene unheated film (unheated film laminate) in which each layer has an even thickness. Thickness ratio of the layers of the unheated film laminate is substantially the same as the thickness ratio of the layers of the preforming body, which has been confirmed by a stereoscopic microscope.

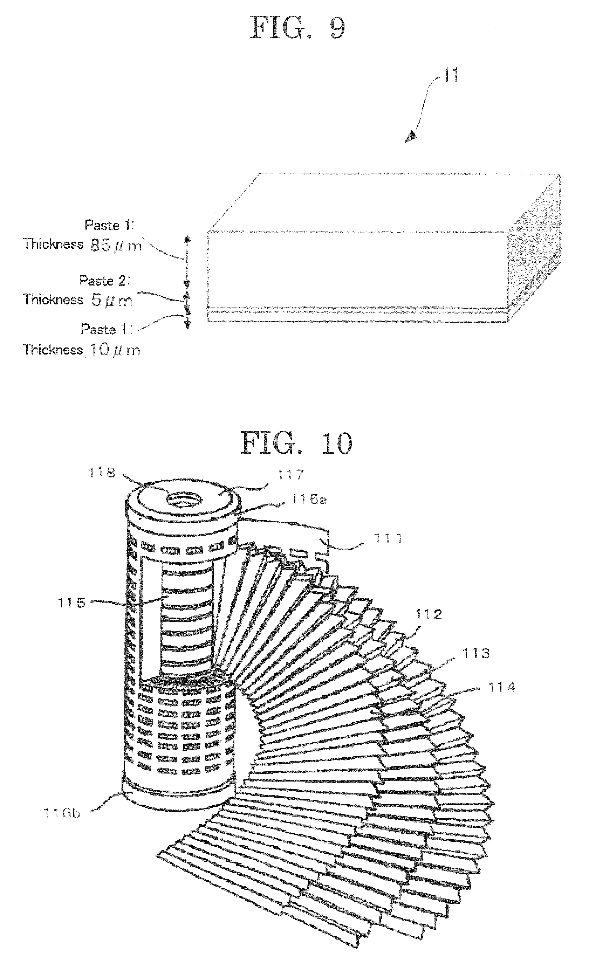

A preforming body 11 having a three-layer structure, formed by placing and pressing the paste 1 and paste 2 to give a thickness ratio (paste 1/paste 2/paste 1) of 10/5/85, as illustrated in FIG. 9, and an unheated film laminate obtained from such preforming body can be produced in the same manner as described above.

### «Heating Step»

The heating step is symmetrically heating the obtained laminate.

The symmetric heating is appropriately selected depending on the intended purpose without any limitation, provided that it can evenly heat the entire laminate composed of two or more layer, prepared by laminating the layer containing the first crystalline polymer (crystalline polymer having a high melting point) and the layer containing the second crystalline polymer (crystalline polymer having a low melting point). Examples of the symmetric heating include heating by a salt bath, heating by a hot air dryer; heating by an oven, roller heating, and IR heating. Among them, salt bath heating is particularly preferable as variation in heating can be prevented when the entire laminate is heated.

In the case where a DSC chart of the second crystalline polymer (crystalline polymer having a low melting point) as obtained from a measurement thereof by a differential scanning calorimeter has one peak, and a shoulder on the higher or lower temperature side of the peak where the peak is on the lower temperature side and the shoulder is on the higher temperature side of the peak, the symmetric heating of the laminate is preferably performed at the temperature higher than the temperature of the peak present on the lower temperature side. When the symmetric heating is performed at the temperature lower than the temperature of the peak present on the lower temperature side, pore diameters are not sufficiently decreased, which may lead to a low ability to capture fine particles.

In the case where a DSC chart of the second crystalline polymer (crystalline polymer having a low melting point) as obtained from a measurement thereof by a differential scanning calorimeter has one peak and a shoulder on the higher or lower temperature side of the peak where the peak is on the high temperature side, and the shoulder is on the lower temperature side of the peak, the symmetric heating is preferably performed at the temperature higher than the temperature of the shoulder on the lower temperature side. When the symmetric heating is performed at the temperature lower than the temperature of the shoulder on the lower temperature side, pore diameters are not sufficiently decreased, which may lead to a low ability to capture fine particles.

Moreover, it is preferred that the symmetric heating of the laminate be performed at the temperature equal to or lower than the melting point of the first crystalline polymer (crystalline polymer having a high melting point) for giving a resulting membrane a high low rate. The temperature of the peak corresponding to the melting point of the crystalline polymer having a high melting point is appropriately selected depending on the intended purpose without any limitation, but it is preferably 343°C to 350°C.

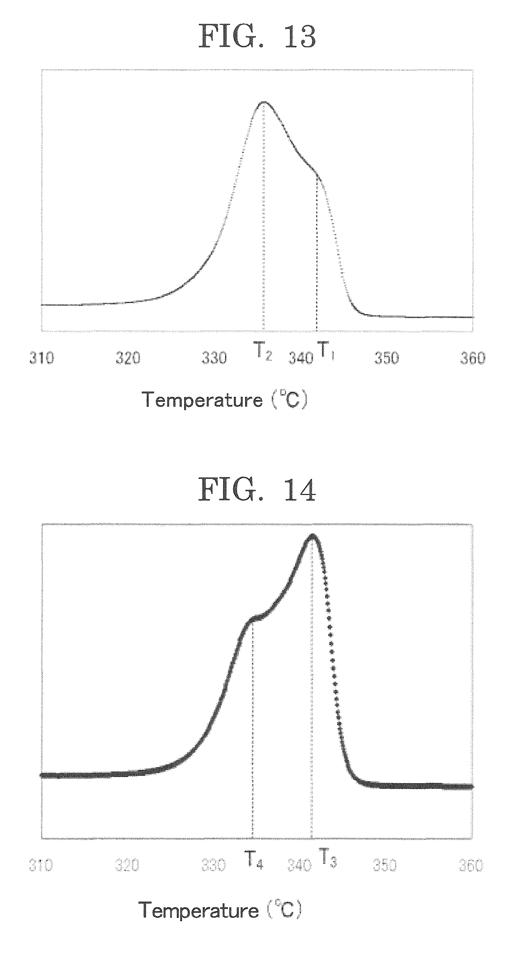

A DSC chart of the second crystalline polymer (crystalline polymer having a low melting point) as obtained by a measurement using a differential scanning calorimeter preferably has a peak T₂ on the lower temperature side, and a higher temperature side shoulder T₁ on the higher temperature side of the peak as depicted in FIG. 13, or preferably has a peak T₃ on the higher temperature side, and a lower temperature side shoulder T₄ on the lower temperature side of the peak as depicted in FIG. 14. In accordance with such DSC chart, the symmetric heating of the laminate is performed at the temperature higher than the temperature of the peak T₂ of FIG. 13, or at the temperature higher than the temperature of the lower temperature side shoulder T₄ of FIG. 14, to thereby yield a crystalline polymer microporous membrane of a multi-layer structure containing short fibrils and nodes.

Note that, in the case where the DSC chart of the second crystalline polymer (crystalline polymer having a low melting point) has two peaks including the lower temperature side peak T₅ and the higher temperature side peak T₆ as depicted in FIG. 15, the symmetric heating of the laminate is preferably performed at the temperature higher than the temperature of the lower temperature side peak T₅.

Specifically, in the case where the DSC chart of the second crystalline polymer as obtained by the measurement by means of a differential scanning calorimeter has a peak T₂ on the lower temperature side, and a higher temperature side shoulder T₁ on the higher temperature side of the peak as depicted in FIG. 13, the lower limit of the temperature for the symmetric heating of the laminate is preferably the higher temperature than the temperature of the peak T₂, the upper limit thereof is preferably the temperature of the peak corresponding to the melting point of the crystalline polymer having a high melting point.

In the case where the DSC chart of the second crystalline polymer has a peak T₃ on the higher temperature side, and a lower temperature side shoulder T₄ on the lower temperature side of the peak as depicted in FIG. 14, the lower limit of the temperature for the symmetric heating of the laminate is preferably higher temperature than the temperature of the lower temperature shoulder T4, and the upper limit thereof is preferably the temperature of the peak corresponding to the melting point of the crystalline polymer having a high melting point.

Note that, in the case where the DSC chart of the second crystalline polymer has two peaks including the lower temperature side peak T₅ and the higher temperature side peak T₆ as depicted in FIG. 15, the lower limit of the temperature for the symmetric heating of the laminate is preferably the temperature higher than the temperature of the lower temperature side peak T₅, and the upper limit thereof is preferably the temperature of the peak corresponding to the melting point of the crystalline polymer having a high melting point.

### «Drawing Step»

The drawing step is drawing the semi-heated film heated by the symmetric heating step.

The drawing is preferably performed on both the length direction and the width direction. The drawing may be performed successively in the length direction and in the width direction, or may be performed biaxially at the same time.

In the case where the drawing is performed successively in the length direction and in the width direction, it is preferred that the drawing be performed in the length direction, followed by performing in the width direction.

The extension rate in the length direction is preferably 1.2 times to 50 times, more preferably 1.5 times to 40 times, and even more preferably 2.0 times to 10 times. The temperature for the drawing in the length direction is preferably 35°C to 330°C, more preferably 45°C to 320°C, and even more preferably 55°C to 310°C.

The extension rate in the width direction is preferably 1.2 times to 50 times, more preferably 1.5 times to 40 times, even more preferably 2.0 times to 30 times, and particularly preferably 2.5 times to 10 times. The temperature for the drawing in the width direction is preferably 35°C to 330°C, more preferably 45°C to 320°C, and even more preferably 60°C to 310°C.

The draw rate in terms of the area of the film is preferably 1.5 times to 2,500 times, more preferably 2 times to 2,000 times, and even more preferably 2.5 times to 100 times. Before the drawing is performed, the crystalline polymer film may be pre-heated at the temperature equal to or lower than the temperature for the drawing.

After the drawing, heat setting may be performed, if necessary. The temperature for the heat setting is generally preferably equal to or higher than the temperature for the drawing, but lower than the melting point of the crystalline polymer for use.

In the case where the crystalline polymer is a fluororesin such as PTFE, the heat setting is preferably performed by heating at the temperature equal to or higher than the melting point thereof.

### <Surface Modification Step>

The surface modification step is applying surface modification to at least at part of the crystalline polymer microporous membrane.

The at least at part of the crystalline polymer microporous membrane include surrounding areas of pores and inner parts of pores, other than an exposed surface of the crystalline polymer microporous membrane.

The surface modification method is appropriately selected depending on the intended purpose without any limitation, and examples thereof include (1) a method for immersing in hydrogen peroxide water or an aqueous solution of a water-soluble solvent, followed by applying laser beams (see JP-A No. 07-304888), (2) a method for applying radio active rays or plasma (see JP-A No. 2003-201571), (3) chemical etching (see JP-A No. 2007-154153), (4) a method for coating with a crosslinking material (see JP-A No. 08-283447), and (5) a method for coating with a polymer material (see JP-A No. 2000-235849).

The crystalline polymer microporous membrane of the present invention can be used for various purposes because the crystalline polymer microporous membrane has very fine pore diameters, can efficiently capture fine particles in the size of several tens nanometers, and has a high flow rate, but it is particularly preferably used as a filtration filter explained below.

### (Filtration Filter)

The filtration filter of the present invention uses the crystalline polymer microporous membrane of the present invention.

When the crystalline polymer microporous membrane of the present invention is used as a filtration filter, the crystalline polymer microporous membrane is arranged so that the position of the layer containing the crystalline polymer having a low melting point comes close to an outlet of a filtrate. By performing filtration with such filtration filter, fine particles in the size of several nanometers can be efficiently captured.

Moreover, since the crystalline polymer microporous membrane of the present invention has a large specific surface area, fine particles introduced from such surface are removed by absorption or deposition before they reach the portion of the minimum pore diameter. Accordingly, the filtration filter can maintain its high filtration efficiency for a long period while preventing clogging.

The filtration filter of the present invention is preferably processed into a pleated form. By arranging the filtration filter in the pleated form, the effective surface area of the filter used for filtration per cartridge can be increased.

FIG. 10 is a developed view showing a structure of an element-exchange type pleated filter cartridge element. Sandwiched between two membrane supports 112 and 114, a microfiltration membrane 113 is corrugated and wound around a core 115 having multiple liquid-collecting slots, and a cylindrical object is thus formed. An outer circumferential cover 111 is provided outside the foregoing members so as to protect the microfiltration membrane. At both ends of the cylindrical object, the microfiltration membrane is sealed with end plates 116a and 116b. The end plates are connected to a sealing portion of a filter housing (not shown), with a gasket 117 placed in between. A filtered liquid is collected through the liquid-collecting slots of the core and discharged from a fluid outlet 118.

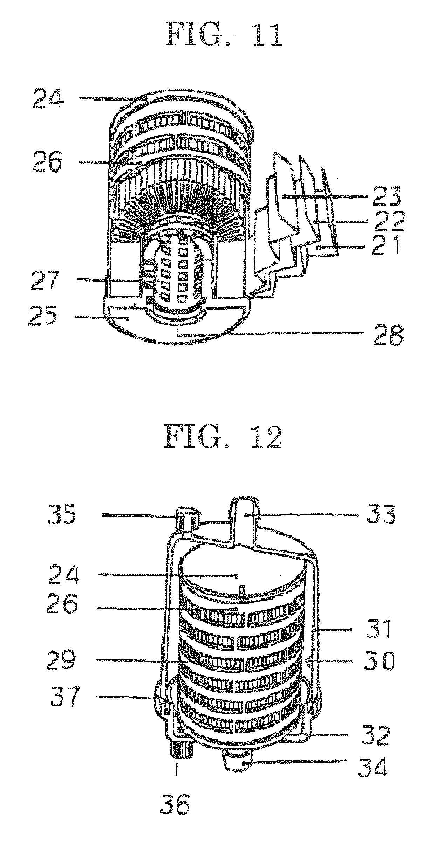

Capsule-type pleated cartridges are shown in FIGs. 11 and 12.

FIG. 11 is a developed view showing the overall structure of a microfiltration membrane filter element before mounted in a housing of a capsule-type cartridge. Sandwiched between two supports 21 and 23, a microfiltration membrane 22 is corrugated and wound around a filter element core 27 having multiple liquid-collecting slots, and a cylindrical object is thus formed. A filter element cover 26 is provided outside the foregoing members so as to protect the microfiltration membrane. At both ends of the cylindrical object, the microfiltration membrane 22 is sealed with an upper end plate 24 and a lower end plate 25.

FIG. 12 shows the structure of a capsule-type pleated cartridge in which the filter element 30 has been installed in a housing so as to form a single unit. The lower end plate is connected in a sealed manner to a water-collecting tube (not shown) at the center of the housing base by means of an O-shaped ring 28. A liquid enters the housing from a liquid inlet nozzle and passes through a filter medium 29, and then the liquid is collected through the liquid-collecting slots of the filter element core 27 and discharged from a liquid outlet nozzle 34. In general, the housing base and the housing cover are thermally fused in a liquid-tight manner at a fusing portion 37.

FIG. 11 shows an instance where the lower end plate and the housing base are connected in a sealed manner by means of the O-shaped ring. It should be noted that the lower end plate and the housing base may be connected in a sealed manner by thermal fusing or with an adhesive. Also, the housing base and the housing cover may be connected in a sealed manner with an adhesive as well as by thermal fusing. FIGs. 10 to 12 show specific examples of microfiltration cartridges, and note that the present invention is not confined to the examples shown in these drawings.

Having a high filtering function and long lifetime as described above, the filtration filter of the present invention enables a filtration device to be compact. In a conventional filtration device, multiple filtration units are used in parallel so as to offset the short filtration life; use of the filter of the present invention for filtration makes it possible to greatly reduce the number of filtration units used in parallel. Furthermore, since it is possible to greatly lengthen the period of time for which the filter can be used without replacement, it is possible to cut costs and time necessary for maintenance.

The filtration filter of the present invention can be suitably used for microfiltration of gases, liquids, etc. For example, the filtration filter can be used in various applications, such as for filtration of corrosive gasses and various gasses for use in the semiconductor industry; filtration and sterilization of washing water for use in the electronic industry, water for medical use, water for pharmaceutical production processes, and water for foods and drinks; wire coating materials; catheters; artificial blood vessels; adhesion inhibiting membranes; anchorages for culturing cells; insulating films; and separators for fuel cells.

### Examples

The present invention will be explained through Examples hereinafter, but these Examples shall not be construed as limiting the scope of the present invention.

### (Example 1)

### <Production of Microporous Membrane>

### -Production of Preforming Body-

To 100 parts by mass of polytetrafluoroethylene fine powder (F106, manufactured by DAIKIN INDUSTRIES, LTD., melting point of 346°C) as a crystalline polymer having a high melting point, 23 parts by mass of hydrocarbon oil (ISOPARH, manufactured by Esso Sekiyu K.K.) as an extrusion aid was added. The resultant was used as a paste 1.

To 100 parts by mass of polytetrafluoroethylene fine powder (F205, manufactured by DAIKIN INDUSTRIES, LTD., melting point of 341°C) as a crystalline polymer having a low melting point, 20 parts by mass of hydrocarbon oil (ISOPARH, manufactured by Esso Sekiyu K.K.) as an extrusion aid was added. The resultant was used as a paste 2.

A DSC chart of the polytetrafluoroethylene fine powder (F205, manufactured by DAIKIN INDUSTRIES, LTD.) is depicted in FIG. 13. It was found from the results presented in FIG. 13 that the polytetrafluoroethylene fine powder F205 had one peak and one shoulder, which were a higher temperature side shoulder (T₁) at 341°C, and a lower temperature side peak (T₂) at 338°C.

Next, the paste 1 and the paste 2 were placed and pressed in a box-shaped metal mold to give a thickness ratio (paste 1/paste 2/paste 1) of 3/1/1, to thereby prepare a preforming body of a three-layer structure.

Here, melting points of the crystalline polymer having a high melting point and the crystalline polymer having a low melting point were measured in the following manner.

### --Measuring Method of Melting Point--

A melting point of the crystalline polymer was determined from a DSC chart as measured by DSC7200 manufactured by SII NanoTechnology Inc. Specifically, a sample to be measured was measured and sampled by about a several milligrams to about 10 mg, and then placed and simply sealed in an aluminum pan, followed by subjecting to a measurement at the speed of 10°C/min. A melting point was corresponded to a peak in the resulting chart. In the case where there were two peaks, or there were one peak and one shoulder, the temperature of whichever having the higher peak intensity was determined as a melting point.

### -Preparation of Unheated Film-

The produced preforming body was inserted into a square cylinder of a paste extrusion meal mold, and was then extruded into a sheet shape multi-layer paste. The resultant was subjected to calendering with a calender roller heated to 60°C, to thereby produce a multi-layer polytetrafluoroethylene film. The obtained multi-layer polytetrafluoroethylene film was passed through a hot air drying oven set to 250°C to dry and remove the extrusion aid, to thereby produce a multi-layer polytetrafluoroethylene unheated film having the average thickness of 100 µm, average width of 250 mm, and specific gravity of 1.45.

### -Production of Symmetrically Heated Film-

The obtained multi-layer polytetrafluoroethylene unheated film was heated for 50 seconds in a salt bath (a salt mixture of potassium nitrate and sodium nitrate was used as a fused salt) temperature of which was maintained at 344°C that was higher than the peak (T₂), to thereby produce a symmetrically heated film.

### - Production of Polytetrafluoroethylene Microporous Membrane-

The obtained symmetrically heated film was drawn between rollers to three times in the size in the length direction at 250°C, and then was wound around a winding roll temporarily. Thereafter, both edges of the film were fastened with clips, and the film was drawn to three times in the size in the width direction at 250°C. Thereafter, heat setting was performed at 370°C. In the manner as described, the polytetrafluoroethylene microporous membrane of Example 1 was produced.

Whether each layer of the obtained polytetrafluoroethylene microporous membrane had a plurality of pores whose average pore diameter was constant (no variation) along the thickness direction was confirmed by freeze-fracturing the microporous membrane and observing the cross-section thereof under a scanning electron microscope (SEM) (JSM-6360, manufactured by JEOL Ltd.). As a result of the observation, it was found that all of the three layers of the polytetrafluoroethylene microporous membrane of Example 1 had a plurality of pores whose average pore diameter were constant (no variation).

A scanning electron microscopic (SEM) photograph of a cross-section of the obtained polytetrafluoroethylene microporous membrane of Example 1, and an enlarged view of the layer containing the second crystalline polymer (crystalline polymer having a low melting point) are depicted in FIG. 18. It was found from the results presented in FIG. 18 that the layer containing the crystalline polymer having a low melting point in the polytetrafluoroethylene microporous membrane of Example 1 had a microstructure containing short fibrils whose average long axis length of 0.06 µm.

### (Example 2)

A polytetrafluoroethylene microporous membrane of Example 2 was produced in the same manner as in Example 1, provided that the preforming body of the three-layer structure having the thickness ratio (paste 1/paste 2/paste 1) of 3/1/1 was replaced with a preforming body of a two-layer structure, which was prepared by placing and pressing the pastes in a box-shape metal mold to give a thickness ratio (paste 1/paste 2) of 4/1.

Whether each layer of the obtained polytetrafluoroethylene microporous membrane had a plurality of pores whose average pore diameter was constant (no variation) along the thickness direction was confirmed in the same manner as in Example 1. As a result, it was found that the two layers both had a plurality of pores whose average pore diameter was constant without any variation.

Moreover, it was found from a scanning electron microscopic (SEM) photograph of the cross-section of the obtained polytetrafluoroethylene microporous membrane that the layer containing the crystalline polymer having a low melting point had a microstructure containing short fibrils whose average long axis length of 0.05 µm.

### (Example 3)

### <Production of Microporous Membrane>

A polytetrafluoroethylene microporous membrane of Example 3 was produced in the same manner as in Example 1, provided that the preforming body of the three-layer structure having the thickness ratio (paste 1/paste 2/paste 1) of 3/1/1 was replaced with a preforming body of a three-layer structure, which was prepared by placing and pressing the pastes in a box-shape metal mold to give a thickness ratio (paste 1/paste 2/paste 1) of 14.3/1/2.

Whether each layer of the obtained polytetrafluoroethylene microporous membrane had a plurality of pores whose average pore diameter was constant (no variation) along the thickness direction was confirmed in the same manner as in Example 1. As a result, it was found that all of the three layers had a plurality of pores whose average pore diameter was constant without any variation.

Moreover, it was found from a scanning electron microscopic (SEM) photograph of the cross-section of the obtained polytetrafluoroethylene microporous membrane that the layer containing the crystalline polymer having a low melting point had a microstructure containing short fibrils whose average long axis length of 0.06 µm.

### (Example 4)

### <Production of Microporous Membrane>

A polytetrafluoroethylene microporous membrane of Example 4 was produced in the same manner as in Example 1, provided that polytetrafluoroethylene fine powder (F106, manufactured by DAIKIN INDUSTRIES, LTD.) as a crystalline polymer having a high melting point was replaced with polytetrafluoroethylene fine powder (CD 123, manufactured by ASAHI GLASS CO., LTD., melting point of 346°C) as crystalline polymer having a high melting point.

Whether each layer of the obtained polytetrafluoroethylene microporous membrane had a plurality of pores whose average pore diameter was constant (no variation) along the thickness direction was confirmed in the same manner as in Example 1. As a result, it was found that all of the three layers had a plurality of pores whose average pore diameter was constant without any variation.

Moreover, it was found from a scanning electron microscopic (SEM) photograph of the cross-section of the obtained polytetrafluoroethylene microporous membrane that the layer containing the crystalline polymer having a low melting point had a microstructure containing short fibrils whose average long axis length of 0.06 µm.

### (Example 5)

### <Production of Microporous Membrane>

A polytetrafluoroethylene microporous membrane of Example 5 was produced in the same manner as in Example 1, provided that a multi-layer polytetrafluoroethylene unheated film was produced using CD126 (melting point of 341°C) of ASAHI GLASS CO., LTD. as a crystalline polymer having a low melting point, instead of using F205 of DAIKIN INDUSTRIES, LTD. as a crystalline polymer having a low melting point, and the obtained multi-layer polytetrafluoroethylene unheated film was heated for 50 seconds in a salt bath (a salt mixture of potassium nitrite and sodium nitrate was used as a fused salt) whose temperature was maintained to 341°C that was higher than the low temperature side shoulder (T₄) to produce a symmetrically heated film.

A DSC chart of CD 126 of ASAHI GLASS CO., LTD. as a crystalline polymer having a low melting point is depicted in FIG. 14. It was found from the results presented in FIG. 14 that CD126 of ASAHI GLASS CO., LTD. as a crystalline polymer having a low melting point had the lower temperature side shoulder (T₄) at 336°C and the higher temperature side peak (T₃) at 341°C.

Whether each layer of the obtained polytetrafluoroethylene microporous membrane had a plurality of pores whose average pore diameter was constant (no variation) along the thickness direction was confirmed in the same manner as in Example 1. As a result, it was found that all of the three layers had a plurality of pores whose average pore diameter was constant without any variation.

Moreover, it was found from a scanning electron microscopic (SEM) photograph of the cross-section of the obtained polytetrafluoroethylene microporous membrane that the layer containing the crystalline polymer having a low melting point had a microstructure containing short fibrils whose average long axis length of 0.15 µm.

### (Comparative Example 1)

### <Production of Microporous Membrane>

A polytetrafluoroethylene microporous membrane of Comparative Example 1 was produced in the same manner as in Example 1, provided that polytetrafluoroethylene multi-layer unheated film was heated at the temperature (338°C) of the lower temperature side peak (T₂)

Whether each layer of the obtained polytetrafluoroethylene microporous membrane had a plurality of pores whose average pore diameter was constant (no variation) along the thickness direction was confirmed in the same manner as in Example 1. As a result, it was found that all of the three layers had a plurality of pores whose average pore diameter was constant without any variation.

Moreover, it was found from a scanning electron microscopic (SEM) photograph of the cross-section of the obtained polytetrafluoroethylene microporous membrane that the layer containing the crystalline polymer having a low melting point had a microstructure containing short fibrils whose average long axis length of 3.35 µm.

### (Comparative Example 2)

### <Production of Microporous Membrane>

A polytetrafluoroethylene microporous membrane of Comparative Example 2 was produced in the same manner as in Example 5, provided that provided that polytetrafluoroethylene multi-layer unheated film was heated at the temperature (336°C) of the lower temperature side shoulder (T₄).

Whether each layer of the obtained polytetrafluoroethylene microporous membrane had a plurality of pores whose average pore diameter was constant (no variation) along the thickness direction was confirmed in the same manner as in Example 1. As a result, it was found that all of the three layers had a plurality of pores whose average pore diameter was constant without any variation.

Moreover, it was found from a scanning electron microscopic (SEM) photograph of the cross-section of the obtained polytetrafluoroethylene microporous membrane that the layer containing the crystalline polymer having a low melting point had a microstructure containing short fibrils whose average long axis length of 5.29 µm.

### (Comparative Example 3)

### <Polytetrafluoroethylene Production of Microporous Membrane>

### -Production of Preforming Body-

To 100 parts by mass of polytetrafluoroethylene fine powder (Fluon PTFE CD1, manufactured by ASAHI GLASS CO., LTD., melting point of 339°C) having the number average molecular weight of 1,000,000 as a crystalline polymer as a crystalline polymer, 27 parts by mass of hydrocarbon oil (ISOPARH, manufactured by Esso Sekiyu K.K.) as extrusion aid was added. The resultant was used as a paste 1.

Similarly, to 100 parts by mass of polytetrafluoroethylene fine powder (Fluon PTFE CD123, manufactured by ASAHI GLASS CO., LTD., melting point of 346°C) having the number average molecular weight of 10,000,000, 27 parts by mass of hydrocarbon oil (ISOPARH, manufactured by Esso Sekiyu K.K.) as an extrusion aid was added. The resultant was used as a paste 2.

Next, the paste 1 and the paste 2 were placed and pressed in a box-shaped metal mold to give a thickness ratio (paste 1/paste 2/paste 1) of 3/1/1, to thereby prepare a preforming body.

### -Preparation of Unheated Film-

The produced preforming body was inserted into a square cylinder of a paste extrusion meal mold, and was then extruded into a sheet shape multi-layer paste. The resultant was subjected to calendering with a calender roller heated to 60°C, to thereby produce a multi-layer polytetrafluoroethylene film. The obtained multi-layer polytetrafluoroethylene film was passed through a hot air drying oven set to 250°C to dry and remove the extrusion aid, to thereby produce a multi-layer polytetrafluoroethylene unheated film having the average thickness of 100 µm, average width of 150 mm, and specific gravity of 1.55.

### -Production of Semi-Heated Film-

A back surface of the obtained multi-layer polytetrafluoroethylene unheated film (side of the paste 2) was heated for 1 minute at the film surface temperature of 345°C by applying near infrared rays emitted from a halogen heater having a tungsten filament therein, to thereby produce a semi-heated film.

### -Production of Polytetrafluoroethylene Microporous Membrane-

The obtained semi-heated film was drawn between rollers to 12.5 times in the size in the length direction at 270°C, and then was wound around a winding roll for temporarily. After preheating the film to 305°C, both edges of the film were fastened with clips, and the film was drawn to 30 times in the size in the width direction at 270°C. Thereafter, heat setting was performed at 380°C. The extension rate of the obtained drawn film in terms of an area was 260 times in an area elongation rate. In the manner as described, a polytetrafluoroethylene microporous membrane of Comparative Example 3 was produced.

It was found that all of the layers of the obtained polytetrafluoroethylene microporous membrane had a plurality of pores whose average pore diameter changed continuously or discontinuously.

It was found from a scanning electron microscopic (SEM) photograph of the cross-section of the obtained polytetrafluoroethylene microporous membrane that the layer containing the crystalline polymer having a low melting point had a microstructure containing short fibrils whose average long axis length of 3.15 µm.

### (Comparative Example 4)

### <Production of Polytetrafluoroethylene Microporous Membrane>

### -Production of Preforming Body-

The paste 2 of Example 1 was independently placed and pressed in a box-shaped metal mold, to thereby produce a preforming body.

### -Production of Unheated Film-

The produced preforming body was inserted into a square cylinder of a paste extrusion meal mold, and was then extruded into a sheet shape single-layer paste. The resultant was subjected to calendering with a calender roller heated to 60°C, to thereby produce a single-layer polytetrafluoroethylene film. The obtained singly-layer polytetrafluoroethylene film was passed through a hot air drying oven set to 250°C to dry and remove the extrusion aid. When the film was wound, however, the film was torn in the middle of the winding, and therefore a single-layer polytetrafluoroethylene unheated film could not be stably produced.

Next, each of the produced microporous membranes of Examples 1 to 5 and Comparative Examples 1 to 3 was subjected to a confirmation of "formation of a plurality of pores piercing through in the thickness direction" and to a measurement of a thickness of each layer. The results are presented in Table 1.

### <Confirmation of "Formation of Plurality of Pores Piercing Through in Thickness Direction">

The "formation of a plurality of pres piercing through in the thickness direction" was confirmed by frozen fracturing each microporous membrane, and a cross-section of the microporous membrane under a scanning electron microscope (SEM) (JSM-6360, manufactured by JEOL Ltd.).

### <Measurement of Thickness of Each Layer>

Thickness of each layer in each of microporous membranes of Examples 1 to 5 and Comparative Examples 1 to 3 was measured by frozen fracturing each microporous membrane, and observing a cross-section of the microporous membrane under a scanning electron microscope (SEM) (JSM-6360, manufactured by JEOL Ltd.). The results are presented in Table 1.

**Table 1**

| | Layer at inlet side | | Intermediate layer | | Layer at outlet side | |
|---|---|---|---|---|---|---|
| | Polymer | Membrane thickness (µm) | Polymer | Membrane thickness (µm) | Polymer | Membrane thickness (µm) |
| Ex. 1 | F106 | 42 | F205 | 14 | F106 | 14 |
| Ex. 2 | F106 | 56 | - | - | F205 | 14 |
| Ex. 3 | F106 | 57 | F205 | 4 | F106 | 8 |
| Ex. 4 | CD123 | 42 | F205 | 14 | CD123 | 14 |
| Ex. 5 | F106 | 41 | CD126 | 15 | F106 | 15 |
| Comp. Ex. 1 | F106 | 51 | F205 | 17 | F106 | 18 |
| Comp. Ex. 2 | F106 | 51 | CD126 | 18 | F106 | 16 |
| Comp. Ex. 3 | CD1 | 48 | CD123 | 15 | CD1 | 15 |

### <measurement of Average Flow Pore Diameter of Pores in Intermediate Layer (Dense Layer)>

Each of the crystalline polymer microporous membranes of Examples 1 to 5 and Comparative Examples 1 to 3 was subjected to a measurement of the average flow pore diameter of the pores in the intermediate layer (dense layer) by means of a perm porometer (manufactured by Porous Materials, Inc.). The results are presented in Table 2.

### <Filtration Test>

Next, each of the crystalline polymer microporous membranes of Examples 1 to 5 and Comparative Examples 1 to 3 was subjected to a filtration test. At first, an aqueous solution containing 1 ppm of polystyrene latex (average particle diameter of 0.05 µm) was filtered with differential pressure of 100 kPa. A capturing rate was calculated from a difference between a concentration of the original solution and a concentration of the filtrate. The results are presented in Table 2.

### <Flow Rate Test>

Next, each of the crystalline polymer microporous membranes of Examples 1 to 5 and Comparative Example s1 to 3 was subjected to a flow rate test.

Specifically, a permeation amount of isopropyl alcohol (IPA) per unit area (m²) and unit time (min) when IPA was passed through with differential pressure of 100 kPa was determined as a flow rate (L.m⁻².min⁻1). The results are presented in Table 2.

**Table 2**

| | Average flow pore diameter of intermediate layer (µm) | Total membrane thickness (µm) | Average long axis length of fibrils (µm) | Filtration test (%) | Flow rate test (L·m⁻²·min⁻¹) |
|---|---|---|---|---|---|
| Ex. 1 | 0.054 | 70 | 0.06 | >95 | 18 |
| Ex. 2 | 0.059 | 70 | 0.05 | >95 | 20 |
| Ex. 3 | 0.072 | 69 | 0.06 | >95 | 34 |
| Ex. 4 | 0.067 | 70 | 0.06 | >95 | 16 |
| Ex. 5 | 0.124 | 71 | 0.15 | >95 | 78 |
| Comp. Ex. 1 | 0.225 | 86 | 3.35 | 72 | 121 |
| Comp. Ex. 2 | 0.364 | 85 | 5.29 | 52 | 321 |
| Comp. Ex. 3 | 0.264 | 78 | 3.15 | 88 | 120 |

Note that, the total membrane thickness presented in Table 2 is a total thickness of the layers presented in Table 1.

### (Example 6)

### -Formation of Filter Cartridge-

The PTFE microporous membrane of Example 1 was laminated to give the following structure, and the resulting laminate was pleated (pleat width = 220 mm) with a fold width of 12.5 mm. The membrane with 230 folds was rounded into a cylinder, and its joint was fused by an impulse sealer. Both edges of the cylinder were cut out by 15 mm each, and the cut surfaces were thermally fused to end plates, to thereby prepare an element exchange-type filter cartridge.

### -Structure-

Primary side net: DELNET (RC-0707-20P) manufactured by AET
   thickness: 0.13 mm, basis weight: 31 g/m², area used: about 1.3 m²
Primary side nonwoven fabric: SYNTEX (PK-404N) manufactured by Mitsui Chemicals, Inc.
   thickness: 0.15 mm, area used: about 1.3 m²
Filter material: PTFE microporous membrane of Example 1
   thickness: about 0.07 mm, area used: about 1.3 m²
Secondary side net: DELNET (RC-0707-20P) manufactured by AET
   thickness: 0.13 mm, basis weight: 31 g/m², area used: about 1.3 m²

Since the filter cartridge of Example 6 according to the present invention uses the crystalline polymer microporous membrane of Example 1 according to the present invention, the filter cartridge had very fine pore diameters, could efficiently capture fine particles in the size of several tens nanometers, and had a high flow rate.

### Industrial Applicability

The crystalline polymer microporous membrane of the present invention and the filtration filter using the crystalline polymer microporous membrane are used in various uses that require filtration, and can be suitably used microfiltration of gases and liquids. For example, the crystalline polymer microporous membrane and the filtration filter can be used in various applications, such as for filtration of corrosive gasses and various gasses for use in the semiconductor industry; filtration and sterilization of washing water for use in the electronic industry, water for medical use, water for pharmaceutical production processes, and water for foods and drinks; high temperature filtration; filtration of reactive chemicals; wire coating materials; catheters; artificial blood vessels; adhesion inhibiting membranes; anchorages for culturing cells; insulating films; and separators for fuel cells.

### Reference Signs List

- 4:: first layer
- 5:: second layer
- 8:: bottom metal mold
- 10:: preforming body
- 11:: preforming body
- 15:: multi-layer polytetrafluoroethylene unheated film (unheated film laminate)
- 101, 102, 103:: crystalline polymer layer
- 101a, 102a, 103a:: pore
- 101b, 102b, 103b:: pore
- 21:: primary side support
- 22:: microfiltration membrane
- 23:: secondary side support
- 24:: upper end plate
- 25:: bottom end plate
- 26:: filter element cover
- 27:: filter element core
- 28:: O-ring
- 29:: filter medium
- 30:: filter element
- 31:: housing cover
- 32:: housing base
- 33:: liquid inlet nozzle
- 34:: liquid outlet nozzle
- 35:: air vent
- 36:: drain
- 37:: fusing portion
- 111:: circumferential cover
- 112:: membrane support
- 113:: microfiltration membrane
- 114:: membrane support
- 115:: core
- 116a, 116b:: end plate
- 117:: gasket
- 118:: fluid outlet

## Claims

1. A crystalline polymer microporous membrane, comprising:
a laminate containing two or more layers and a plurality of pores piercing through the laminate in a thickness direction thereof, where the two or more layers include a layer containing a first crystalline polymer, and a layer containing a second crystalline polymer stacked to form the laminate,
wherein the first crystalline polymer has a higher melting point than a melting point of the second crystalline polymer,
wherein at least the layer containing the second crystalline polymer in the laminate has a microstructure containing at least fibrils having an average long axial length of 1 µm or shorter, and
wherein at least one of the layers constituting the laminate has a plurality of pores whose average pore diameter is constant without any variation at least at part along a thickness direction of the laminate.

2. The crystalline polymer microporous membrane according to claim 1, wherein the microstructure further contains nodes.

3. The crystalline polymer microporous membrane according to claim 1 or 2, wherein the layer containing the second crystalline polymer has a plurality of pores having an average flow pore diameter of less than 200 nm.

4. The crystalline polymer microporous membrane according to any one of claims 1 to 3, wherein the laminate contains two layers of the layer containing the first crystalline polymer, and one layer of the layer containing the second crystalline polymer provided between the two layers of the layer containing the first crystalline polymer.

5. The crystalline polymer microporous membrane according to any one of claims 1 to 4, wherein the maximum thickness A of the layer containing the second crystalline polyester is less than the maximum thickness B of the layer containing the first crystalline polymer, and the maximum thickness A of the layer containing the second crystalline polyester and the maximum thickness B of the layer containing the first crystalline polymer satisfy a relationship of A/B ≤ 1/2.

6. The crystalline polymer microporous membrane according to claim 5, wherein the maximum thickness A of the layer containing the second crystalline polyester and the maximum thickness B of the layer containing the first crystalline polyester satisfy a relationship of A/B ≤ 1/3.

7. The crystalline polymer microporous membrane according to any one of claims 1 to 6, wherein the layer containing the second crystalline polymer in the laminate has a thickness of 0.1 µm to 50 µm.

8. The crystalline polymer microporous membrane according to any one of claims 1 to 7, wherein the first crystalline polymer is either polytetrafluoroethylene or a polytetrafluoroethylene copolymer.

9. The crystalline polymer microporous membrane according to any one of claims 1 to 8, wherein the second crystalline polymer is either polytetrafluoroethylene or a polytetrafluoroethylene copolymer.

10. The crystalline polymer microporous membrane according to claim 8 or 9, wherein the polytetrafluoroethylene copolymer contains at least two selected from the group consisting of tetrafluoroethylene, perfluoroalkyl vinyl ether, hexafluoropropylene, and chlorotrifluoroethylene.

11. A method for producing a crystalline polymer microporous membrane, comprising:
placing and pressing a first crystalline polymer and a second crystalline polymer in a metal mold to produce a laminate preforming body including the first crystalline polymer and the second crystalline polymer, extruding the laminate preforming body, and rolling the extruded preforming body to form a laminate;
symmetrically heating the laminate; and
drawing the laminate,
wherein the crystalline polymer microporous membrane is the crystalline polymer microporous membrane as defined in any one of claims 1 to 10.

12. The method for producing a crystalline polymer microporous membrane according to claim 11, wherein the second crystalline polymer has one peak and a shoulder on the higher temperature or lower temperature side of the peak in a DSC chart thereof as obtained by a measurement using a differential scanning calorimeter,
wherein, in the case where the peak is present on the lower temperature side and the shoulder is present on the higher temperature side of the peak, the symmetrically heating is performed at temperature higher than temperature of the peak on the lower temperature side, and
in the case where the peak is present on the higher temperature side and the shoulder is present on the lower temperature side of the peak, the symmetrically heating is performed at temperature higher than temperature of the shoulder on the lower temperature side.

13. The method for producing a crystalline polymer microporous membrane according to claim 11 or 12, wherein the symmetrically heating the laminate is performed at temperature that is equal to or lower than a melting point of the first crystalline polymer.

14. The method for producing a crystalline polymer microporous membrane according to any one of claims 11 to 13, wherein the symmetrically heating the laminate is performed in a salt bath.

15. A filtration filter, comprising the crystalline polymer microporous membrane as defined in any one of claims 1 to 10.

16. The filtration filter according to claim 15, wherein the crystalline polymer microporous membrane is arranged so that the layer containing the second crystalline polymer having a low melting point comes close to a side of an outlet.
